# EUROPÄISCHE PATENTSCHRIFT

(11) **EP 2 944 947 B1**
(45) Veröffentlichungstag und Bekanntmachung des Hinweises auf die Patenterteilung: **13.09.2017**
(21) Anmeldenummer: 15175797.8
(22) Anmeldetag: 24.10.2012
(51) Int. Cl.: G01N 21/90, G01N 21/91, G01N 21/01

(54) **SCHNELLTEST-VERFAHREN ZUR BEWERTUNG DER DELAMINATIONSNEIGUNG VON GLASPACKMITTELN**
RAPID TEST METHOD FOR EVALUATING THE DELAMINATION TENDENCY OF GLASS PACKAGING
PROCÉDÉ D'ESSAI RAPIDE POUR ÉVALUER LA TENDANCE À LA DÉLAMINATION D'ÉLÉMENTS D'EMBALLAGE EN VERRE

(30) Priorität: 27.10.2011 DE 102011085267
(43) Veröffentlichungstag der Anmeldung: 18.11.2015
(62) Teilanmeldung aus: 12775521.3
(73) Patentinhaber: Schott AG, 55122 Mainz (DE)
(72) Erfinder: SCHEUMANN, Volker, 55122 Mainz (DE); KLAUSE, Michaela, 55286 Woerrstadt (DE); ROTHHAAR, Dr. Uwe, 67134 Birkenheide (DE)

(56) Entgegenhaltungen:
- DE-A1-102009 050 714
- IACOCCA RONALD G ET AL: "Factors affecting the chemical durability of glass used in the pharmaceutical industry", AAPS PHARMSCITECH, SPRINGER NEW YORK LLC, US, Bd. 11, Nr. 3, 1. September 2010 (2010-09-01), Seiten 1340-1349, XP008159537, ISSN: 1530-9932, DOI: 10.1208/S12249-010-9506-9 [gefunden am 2010-08-26]
- FRANK R. BACON ET AL: "EFFECT OF TIME AND TEMPERATURE ON ACCELERATED CHEMICAL DURABILITY TESTS MADE ON COMMERCIAL GLASS BOTTLES*", JOURNAL OF THE AMERICAN CERAMIC SOCIETY, Bd. 23, Nr. 1, 1. Januar 1940 (1940-01-01) , Seiten 1-9, XP055050685, ISSN: 0002-7820, DOI: 10.1111/j.1151-2916.1940.tb14184.x
- MATTHEW HALL: "Delamination in pharmaceutical glass vials", 20030101, 1. Januar 2003 (2003-01-01), Seiten 1-19, XP007921468,
- ENNIS R D ET AL: "Glass vials for small volume parenterals: influence of drug and manufacturing processes on glass delamination", PHARMACEUTICAL DEVELOPMENT AND TECHNOLOGY, NEW YORK, NY, US, Bd. 6, Nr. 3, 1. August 2001 (2001-08-01), Seiten 393-405, XP008159524, ISSN: 1083-7450, DOI: 10.1081/PDT-100002248
- ANONYMOUS: "Detecting Siliceous Flakes in Glass Containers using Microscopic Techniques", 20110311 , Nr. 4724 11. März 2011 (2011-03-11), Seite 1, XP007921477, Gefunden im Internet: URL:http://www.westpharma.com/en/support/S cientific%20Posters/Detecting%20Siliceous% 20Flakes%20in%20Glass%20Containers%20using %20Microscopic%20Techniques.pdf
- SCHMID B ET AL: "GLASS DELAMINATION. FACTS-PREVENTION-RECOMMENDATIONS", 20110501, 1. Mai 2011 (2011-05-01), Seiten 1-4, XP007921466,
- ZAI-QING WEN ET AL: "Nondestructive detection of glass vial inner surface morphology with differential interference contrast microscopy", JOURNAL OF PHARMACEUTICAL SCIENCES, Bd. 101, Nr. 4, 1. April 2012 (2012-04-01) , Seiten 1378-1384, XP055050536, ISSN: 0022-3549, DOI: 10.1002/jps.23048
- WEN ZAI-QING ET AL: "Nondestructive detection of glass vial inner surface morphology with differential interference contrast microscopy", JOURNAL OF PHARMACEUTICAL SCIENCES, AMERICAN PHARMACEUTICAL ASSOCIATION, WASHINGTON, US, Bd. 101, Nr. 4, 1. April 2012 (2012-04-01) , Seiten 1378-1384, XP008159534, ISSN: 0022-3549, DOI: 10.1002/JPS.23048 [gefunden am 2012-01-10]
- COLLINS W D AND RIFFENBURG H B: "Contamination of Water Samples with Material Dissolved from Glass Containers", INDUSTRIAL AND ENGENEERING CHEMISTRY, Bd. 15, Nr. 1, 1923, Seiten 48-49, XP055057772,

## Beschreibung

Die Erfindung betrifft ein Schnelltest-Verfahren zur Bewertung der Delaminationsneigung von Glas-Packmitteln, insbesondere für den Pharmabereich.

### Hintergrund der Erfindung

Seit Jahrzehnten werden Medikamente in Fläschchen, Ampullen, Karpullen oder Spritzen aus Glas verpackt. Die Kombination verschiedener Materialeigenschaften von Glas, insbesondere die hohe Transparenz, mechanische Beständigkeit, die geringe Durchlässigkeit und Permeabilität in Verbindung mit der hohen chemischen Beständigkeit, ist entscheidend für die Beibehaltung der Qualität der Arzneimittel und damit deren Wirksamkeit.

Trotz dieser generellen Eignung von Glasmaterialien können verschiedene Eigenschaften eines Medikaments (z.B. lonenstärke, pH-Wert, Zusammensetzung eines vorhandenen Puffers) unter bestimmten Fertigungs- und Lagerbedingungen zu chemischen Reaktionen auch mit hochbeständigen Gläsern, wie Borosilikatgläsern, führen. Eine mögliche Folge solcher Reaktionen sind Korrosionsprozesse, bei denen Partikel in Lamellen- oder Plättchenform gebildet werden, die sich noch während der Lagerungsdauer von der Glaswand lösen können. Dieses Verhalten von Glas wird aufgrund des Ablösens der Partikel aus der Glaswand auch als "Delamination" bezeichnet.

Der Begriff der "Delamination", der herkömmlicherweise das Ablösen von Schichten in Werkstoffverbunden oder das Ablösen einer Korrosionsschicht auf einem Stahlteil bezeichnet, wurde für dieses Phänomen auf den Glassektor übertragen.

Die Delamination von Glas geht auf die Wechselwirkungen von chemischen Verbindungen mit der Glasoberfläche zurück, die sehr komplex sind und nicht vollständig verstanden sind. Im Wesentlichen geht man von 2 Mechanismen aus: Der erste Mechanismus ist das Herauslösen von Komponenten aus der Oberfläche des Glases durch einen diffusions-kontrollierten lonenaustauschprozess. Der zweite Mechanismus ist der alkalische Angriff, der auch als Hydrolyse oder Netzwerksangriff bezeichnet wird, der zusätzlich und gleichzeitig zum ersten abläuft und die Auflösung der Glasoberfläche und damit die Freisetzung der Bestandteile der Glasmatrix bewirkt. Beide Mechanismen tragen zur Delamination von Glas bei; eine Erhöhung z.B. der lonenstärke, Erhöhung des pH-Werts, Vergrößerung des Oberflächen-zu-Volumen-Verhältnisses sowie die thermische Verarbeitung können die Delamination verstärken

Die Glaszusammensetzung spielt bei diesen Mechanismen ebenfalls eine Rolle. Enthalten Gläser große Anteile an gering löslichen Komponenten, wie beispielsweise Siliziumdioxid, Aluminiumoxid, Titandioxid und/oder Oxide der Seltenen Erden, so wird praktisch kaum ein Herauslösen aus der Glasmatrix beobachtet und es tritt auch keine lokale Korrosion auf. Andere Komponenten, wie Alkali- und Erdalkalioxide, sowie die Netzwerkbildner Bor- und Phosphoroxid können hingegen einfacher aus der Glasmatrix herausgelöst werden.

Das Ausmaß der Delamination hängt neben der Art und Zusammensetzung der Medikamentenformulierung und der Glaszusammensetzung auch in hohem Maß vom gewählten Fertigungsprozess für die Glasverpackung, wie Fläschchen, Ampullen, Karpulen, Spritzen und dergleichen, ab. Beispielsweise zeigen aus Glasrohr geformte Fläschchen nur innerhalb des bei der Umformung stark erhitzten Wandbereichs eine Delamination unter Bildung der beschriebenen Lamellen.

In den Jahren 2009, 2010 und 2011 musste eine große Reihe von Medikamenten-Chargen wegen auftretender Delamination der Glas-Packmittel vom Markt zurückgerufen werden, wobei unterschiedlichste Produkte und Firmen betroffen waren. Neben dem enormen finanziellen Verlust und dem Schaden für die Reputation, den ein solcher Rückruf verursacht, erfordert insbesondere der Schutz des Patienten eine Vermeidung von derart schadhaftem Verpackungsmaterial.

Wie bereits beschrieben, bildet sich die Delamination erst im Laufe der Lagerung aus und kann somit nicht durch eine Inspektion unmittelbar nach der Abfüllung der Medikamente in das entsprechende Glas-Packmittel festgestellt und damit vermieden werden. Um dennoch eine Vorhersage über das Risiko einer in absehbarer Zeit auftretenden schadhaften Verpackung zu treffen, werden beispielsweise Tests zur beschleunigten Alterung eingesetzt, bei denen das abgefüllte Medikament oder einzelne Bestandteile des Medikaments (z.B. Placebo-Lösung ohne Wirkstoff), zum Beispiel bei erhöhter Temperatur (30°C bis 60 °C), eingelagert werden. Im Abstand von mehreren Tagen, Wochen oder Monaten erfolgt dann eine visuelle Inspektion hinsichtlich der charakteristischen Lamellen.

Ähnliche Tests werden auch mit in der Pharmazie üblichen Puffern, wie Citrat, Phosphat und dergleichen, oder mit bestimmten Testsubstanzen, wie Lösungen mit Glutarsäure oder Glycin, durchgeführt.

Die bekannten pharmazeutischen Analysen der Glasdelamination beschäftigen sich daher hauptsächlich mit dem Einfluss der Delamination auf die Medikamentenqualität und beruhen auf Untersuchungen des enthaltenen Arzneistoffs an sich, dessen Änderungen der Eigenschaften und Wirksamkeit, dessen Reinheit und dergleichen, d.h. die Tests untersuchen die Veränderungen des Medikaments aufgrund des Kontakts mit der Innenwand des Glasgefäßes mit dem Medikament. Beschrieben sind derartige Verfahren zum Beispiel in lacocca, R.G.,Toltl, N., et al., Factors Affecting the Chemical Durability of Glass Used in the Pharmaceutical Industry, AAPS PharmSciTech, 26. August 2010; DOI: 10.1208/s12249-010-9506-9; Ennis RD, Pritchard R, et al., Glass vials for small volume parenterals: influence of drug and manufacturing process on glass delamination, Pharm. Dev. and Tech., 2001, 6(3):393-405. Üblicherweise erstrecken sich die in der Literatur beschriebenen Tests über einige Wochen oder wenige Monate.

In dem Artikel "Effect of time an temperature on accelerated chemical durability tests made on commercial glass bottles" von Frank R. Bacon et al., Journal of the American Ceramic Society, Bd. 23. 1.1.1940 wird die Aussagekraft eines Schnelltests bewertet, bei welchem die zu prüfenden Glasflaschen mit destilliertem Wasser als Prüfflüssigkeit beaufschlagt werden.

In dem Artikel "Delamination in pharmaceutical glass vials" von Matthew Hall vom 1.1.2003, wird die Delamination von Pharma Fläschchen untersucht, wobei die Fläschchen mit Water for Injectables, KCl, NaCl und einem Citrat als Prüfflüssigkeit beaufschlagt werden.

In dem im Internet veröffentlichten Artikel "Detecting Siliceous Flakes in Glass Containers using Microscopic Techniques" vom 11.3.2011, wird offenbart ein Testverfahren, in welchem mit einer Flüssigkeit befüllte Behälter autoklaviert und in einem Ofen getrocknet werden.

Die oben erwähnten Tests zur beschleunigten Alterung weisen jedoch gravierende Nachteile auf:
Die Bewertung erfolgt ausschließlich auf der Basis einer optischen Inspektion hinsichtlich des Vorhandenseins von Lamellen im Medikament. Das Ablösen der Lamellen von der Glaswand erfolgt aber mehr oder weniger zufällig und kann durch mechanische Kräfte, wie etwa durch Schütteln oder andere äußere Manipulationen, gefördert werden. Vor diesem Hintergrund sind nur große Unterschiede in der Neigung zur Delamination nachzuweisen.

Weiterhin haben unterschiedliche Zusammensetzungen der Medikamente einen unterschiedlichen Einfluss auf die gewählte Glasverpackung, so dass keine generelle Aussage über eine Glasdelamination der Behälter getroffen werden kann, sondern immer nur spezielle Einzelfälle untersucht werden.

Schließlich benötigen die beschleunigten Alterungstests zu viel Zeit und sind zu spezifisch, um diese produktionsbegleitend bei der Fertigung der Glas-Packmittel einzusetzen. Hierfür wird ein Test benötigt, der relativ kurzfristig, also etwa innerhalb eines Tages ein Prüfergebnis liefert und so eine Steuerung der Fertigung erlaubt.

Der vorliegenden Erfindung liegt demnach die Aufgabe zugrunde, die oben geschilderten Nachteile des Standes der Technik zu vermeiden und ein Testverfahren bereitzustellen, das in relativ kurzer Zeitspanne und in zuverlässiger Art und Weise eine Bewertung der Delaminationsneigung von Glas-Packmitteln ermöglicht. Das Testverfahren sollte man bereits vor der Verpackung eines Medikaments in ein Glas-Packmittel durchführen können, so dass die Verwendung von schadhaftem oder ungeeignetem Verpackungsmaterial möglichst gänzlich ausgeschlossen werden kann. Das Testverfahren sollte bereits während der Fertigung des Glasverpackungsmaterials bzw. Glas-Packmittels einsetzbar sein, um so Änderungen und/oder Anpassungen noch während des Fertigungsprozesses des Glasmaterials oder des Glas-Packmittels vornehmen zu können.

### Beschreibung der Erfindung

Erfindungsgemäß wird die Aufgabe der vorliegenden Erfindung durch ein Schnelltest-Verfahren zur Bewertung der Delaminationsneigung in Glas-Packmitteln, insbesondere für den Pharmabereich, gelöst, das die nachfolgenden Schritte aufweist:
Schritt (1): Aussetzen der leeren Glas-Packmittel einer Atmosphäre aus Wasserdampf zur Ausbildung einer Korrosionszone;
   und anschließend Durchführen von einem weiteren Schritt, ausgewählt aus Schritt (2a) oder Schritt (2b), umfassend
Schritt (2a): Visualisieren der Korrosionszone unter Verwendung eines Lichtmikroskops;
Schritt (2b): Visualisieren der Korrosionszone durch Anfärben und anschließende Inspektion; oder

Das erfindungsgemäße Verfahren wird in Form eines Delaminations-Schnelltests zur Verfügung gestellt und ermöglicht eine relativ schnelle Bewertung der Neigung zur Delamination für Glas-Packmittel, insbesondere für den Pharmabereich.

Unter "Glas-Packmittel" werden im Rahmen der Erfindung ohne Beschränkung jegliche Verpackungen aus Glas verstanden. Dies stellt jede Art an Verpackungen dar, die aus Glas hergestellt und dem Fachmann aus dem Stand der Technik bekannt sind. Es liegen keine Beschränkungen hinsichtlich Form und Größe des Glas-Packmittels vor. Besonders bevorzugt sind solche Verpackungen aus Glas, die im Pharmabereich eingesetzt werden. Beispielhaft seien angeführt Flaschen, insbesondere Fläschchen und Phiolen, Ampullen, Karpulen, Dosen und Spritzen.

Das Schnelltest-Verfahren der Erfindung umfasst 2 Schritte: In Schritt (1) wird das leere Glas-Packmittel einer Atmosphäre aus Wasserdampf ausgesetzt, wodurch sich eine Korrosionszone ausbildet. In Schritt (2) des erfindungsgemäßen Schnelltest-Verfahrens erfolgt die Visualisierung der Korrosionszone in den kritischen Bereichen (entweder Schritt (2a) oder Schritt (2b)).

Vor Durchführen von Schritt (1) ist es zweckmäßig, etwaige vorhandene Verunreinigungen aus den Glas-Packmitteln zu entfernen, d.h. die Glas-Packmittel vor der Wasserdampfbehandlung zu reinigen. Hierdurch kann sichergestellt werden, dass das Testergebnis nicht durch Verunreinigungen beeinträchtigt wird. Die Reinigung kann beispielsweise durch mehrfaches Befüllen und Entleeren der Packmittel mit Wasser, beispielsweise Leitungswasser, vollentsalztes Wasser oder Reinstwasser durchgeführt werden. Bevorzugt wird zumindest für den letzten Spül- bzw. Waschvorgang vollentsalztes Wasser oder Reinstwasser eingesetzt, um Eintrockenrückstände zu vermeiden. Das Wasser kann Raumtemperatur aufweisen, es kann auch auf erhöhte Temperatur, beispielsweise über 50 °C, vorgewärmt sein.
Im Anschluss daran erfolgt das Trocknen der Glas-Packmittel. Das Trocknen wird bevorzugt durch Aus- bzw. Trockenblasen mit einem inerten Gas, z.B.
Stickstoff oder gereinigter, ölfreier Pressluft durchgeführt. Andere Reinigungsverfahren sind ebenfalls möglich. Diese sollten jedoch die Konsistenz des Glasmaterials nicht verändern, so dass das Testergebnis hierdurch nicht verfälscht wird.

In Schritt (1) des erfindungsgemäßen Schnelltest-Verfahrens kann eine Korrosion des Glasmaterials durch heißen Wasserdampf stattfinden. Die Bereiche auf der Glaswand des Packmittels, die verstärkt zur Delamination neigen, weisen eine geringere chemische Beständigkeit auf, d.h. ein korrosiver Angriff erfolgt hier schneller. Diese Bereiche werden auch als die "kritischen Bereiche" bezeichnet. Diese sind je nach Glas-Packmittel unterschiedlich. In Fläschchen oder Phiolen stellt insbesondere der Übergangsbereich Wand/Boden einen kritischen Bereich dar. Die Unterschiede in der chemischen Beständigkeit könnten eine Folge der lokalen Temperatureinwirkung bei der Formung von Glas-Packmitteln aus Röhren sein.

Bei dem Schnelltest-Verfahren der vorliegenden Erfindung werden somit die leeren (und unverschlossenen) Glas-Packmittel zunächst einer Atmosphäre aus heißem Wasserdampf ausgesetzt. Die Vorrichtung, in der die Glas-Packmittel Wasserdampf ausgesetzt werden, ist erfindungsgemäß ebenfalls nicht besonders beschränkt. Bevorzugt wird der Verfahrensschritt (1) jedoch in einem Autoklaven durchgeführt. Hierbei handelt es sich um einen herkömmlichen gasdicht verschließbaren Druckbehälter beliebiger Größe, der üblicherweise für die thermische Behandlung von Stoffen im Überdruckbereich eingesetzt wird. Im vorliegenden Fall wird der Autoklav wie für eine Sterilisierung von medizinischen Instrumenten eingesetzt, wobei die Luft im Autoklaven durch Wasserdampf verdrängt wird. Diese im Rahmen der vorliegenden Erfindung auch als "Autoklavierung" bezeichnete Verfahrensweise in Schritt (1) wird erfindungsgemäß bevorzugt für mehrere Minuten bis zu mehreren Stunden, bevorzugt mindestens 30 Minuten, bevorzugt 1 bis 8 Stunden, noch bevorzugter 3 bis 6 Stunden durchgeführt. Die Temperatur beträgt über 100 °C, und liegt bevorzugt im Bereich von über 100 bis 180 °C, bevorzugt bei 110 bis 150 °C. Bei der Verwendung eines 0Autoklaven stellt sich bei Schritt (1) ein temperaturabhängiger Überdruck ein. Schritt (1) kann aber auch bei Atmosphärendruck durchgeführt werden.

Der Wasserdampf bewirkt im untersuchten Glas-Packmittel einen korrosiven Angriff der Glaswand durch eine Kombination aus Auslaugung und Hydrolyse. In der Folge bildet sich im oberflächennahen Bereich des Glases eine Korrosionszone aus, die bezüglich der Zusammensetzung und der Morphologie bzw. Struktur gegenüber dem Grundglas verändert ist. Diese Schicht ist in den kritischen Bereichen besonders stark ausgeprägt.

Die in Schritt (1) erzeugte Korrosionsschicht weist zumeist eine Dicke von weniger als 1 µm auf und ist somit mit dem bloßen Auge nicht zu erkennen. Daher muss eine Bewertung durch andere Verfahren erfolgen. Dies erfolgt in Schritt (2a) unter Verwendung eines Lichtmikroskops und in Schritt (2b) durch Anfärben und anschließende optische Inspektion.
Nach Durchführen von Schritt (1) ist es wieder zweckmäßig die Glas-Packmittel einer Reinigung, wie bereits oben geschildert, zu unterziehen. Beispielsweise kann ein Spülen oder Waschen mit Leitungswasser, vollentsalztem Wasser oder Reinstwasser erfolgen.

Bevorzugt werden für den letzten Spül- bzw. Waschvorgang wieder vollentsalztes Wasser oder Reinstwasser eingesetzt, um Eintrockenrückstände zu vermeiden. Das Wasser kann Raumtemperatur aufweisen, es kann auch auf erhöhte Temperatur, beispielsweise über 50 °C, vorgewärmt sein. Beim anschließenden Trockenblasen, beispielsweise unter Verwendung von inertem Gas, wie Stickstoff, erfolgt das Trocknen der gereinigten Glas-Packmittel, um negative Einflüsse auf den Test durch Verunreinigungen auszuschließen.

Wenn eine Quantifizierung der gelösten Glasbestandteile gemäß Schritt (2c) durchgeführt werden soll, sollte die Reinigung unter Verwendung von Wasser weggelassen werden.

Im zweiten Verfahrensschritt, d.h. entweder in Schritt (2a), (2b) oder (2c), wird die in Schritt (1) gebildete Korrosionsschicht im Glas ausgewertet. Dieser zweite Verfahrensschritt wird nachfolgend im Einzelnen erläutert:

### Schritt (2a):

### Visualisierung mit einem Lichtmikroskop

Die Visualisierung wird erfindungsgemäß unter Verwendung eines Lichtmikroskops durchgeführt. Besonders bevorzugt wird ein Stereomikroskop eingesetzt. Hierbei handelt es sich um ein spezielles Lichtmikroskop, bei dem für beide Augen ein getrennter Strahlengang bereitgestellt wird, so dass beide Augen das zu untersuchende Objekt aus einem anderen Winkel sehen und ein "Stereo-Effekt" in Form eines räumlichen Bildeindrucks entsteht. Unter Verwendung eines Lichtmikroskops und bevorzugt einer streifenden Beleuchtung wird die Ausprägung von Interferenzfarben zur Bewertungsgrundlage.
Der Brechungsindex der Korrosionszone unterscheidet sich aufgrund der veränderten Zusammensetzung und Struktur von dem des Grundglases. Bei geeigneter Beleuchtung wird ein Teil des Lichts an der Grenzfläche zum Glas reflektiert und interferiert mit dem Licht, welches an der Oberfläche der Schicht reflektiert wird. Tendenziell ist dieser Effekt umso ausgeprägter je stärker die Korrosionschicht ausgeprägt ist, d.h. um so deutlicher sind die Interferenzfarben wahrnehmbar.

### Schritt (2b):

### Visualisierung durch Anfärben und anschließende Inspektion

Das unter Schritt (2a) beschriebene Visualisierungsverfahren hat den Nachteil, dass zu dessen Durchführung ein teures Mikroskop benötigt wird. Die Visualisierung durch Anfärben kommt demgegenüber ohne aufwendige Vorrichtung aus. Weiterhin sind Färbemittel zum Anfärben von Glas preiswert und ohne weiteres erhältlich.

Die Korrosionszone weist eine andere Zusammensetzung und vor allem eine "offenere" Struktur als das Grundglas auf. Häufig sind diese Zonen rau oder sogar porös. Diese Unterschiede können daher durch geeignete Färbemittel sichtbar gemacht werden. Dies kann beispielsweise durch Befüllen der Glas-Packmittel (nach Durchführung von Schritt (1) des Schnelltest-Verfahrens) mit einer Lösung von Methylenblau in einem Lösungsmittel, wie beispielsweise Wasser oder Alkohol, erfolgen, wodurch eine Blaufärbung der kritischen Bereiche resultiert.

Die Bewertung kann anschließend durch eine visuelle Inspektion erfolgen. Zweckmäßigerweise werden die mit Methylenblau-Lösung gefüllten Glas-Packmittel mehrere Minuten bis zu mehrere Stunden bei Raumtemperatur stehen gelassen, um eine Reaktion der korrodierten Bereiche mit dem Farbstoff zu ermöglichen. Die Überprüfung der Blaufärbung erfolgt vorzugsweise anhand der wieder geleerten Glas-Packmittel. Je nach Ausprägung der Blaufärbung kann auf eine mehr oder weniger große, bzw. deutlich ausgeprägte Korrosionszone geschlossen werden. Je stärker die Blaufärbung und je dicker die Korrosionszone, um so stärker neigt das untersuchte Glas zur Delamination.

Das erfindungsgemäße Schnelltest-Verfahren zeichnet sich durch zahlreiche Vorteile aus:
So weist das Verfahren der Erfindung die oben erläuterten Nachteile des Standes der Technik nicht auf. Die Bewertung der Delamination erfolgt nicht anhand verschiedener in die Behälter gefüllter Medikamentenformulierungen, beispielsweise auf Basis einer optischen Inspektion hinsichtlich des Vorhandenseins von Lamellen im Medikament. Vielmehr wird direkt das Glas, das bereits in Form der fertigen Verpackung vorliegt, getestet. Somit wird die Neigung des Glasbehälters zur Delamination unabhängig von einem enthaltenen Medikament überprüft und bewertet. Im Gegensatz zu den aus dem Stand der Technik bekannten beschleunigten Alterungstests erfordert das erfindungsgemäße Schnelltest-Verfahren deutlich weniger Zeitaufwand, ein Ergebnis liegt je nach Wahl des eingesetzten Untersuchungsverfahrens bereits innerhalb einer Arbeitsschicht, zumindest aber innerhalb etwa eines Tages vor. Es kann produktionsbegleitend bei der Fertigung der Glas-Packmittel eingesetzt werden. Somit kann mit dem Schnelltest-Verfahren auch eine Steuerung der Fertigung erfolgen.

Das erfindungsgemäße Verfahren besteht aus 2 Schritten, wobei zwischen 2 Varianten in Verfahrensschritt (2) gewählt werden kann. Schritt (2a) und Schritt (2b) könnten auch miteinander kombiniert werden, um das erhaltene Ergebnis zusätzlich abzusichern. Beispielsweise könnte man nach Durchführung von Schritt (1) Schritt (2a) und Schritt (2b) kombinieren, d.h. nacheinander durchführen. Es ist aber in der Regel ausreichend, wenn nach Schritt (1) nur einer der Schritte (2a) oder (2b) durchgeführt wird.

Das erfindungsgemäße Verfahren stellt einen zuverlässigen und einfach einsetzbaren Test dar, der dem Verwender in relativ kurzer Zeit eine Einschätzung ermöglicht, in welchem Ausmaß die untersuchten Glasbehälter zu einer Delamination neigen.

Nachfolgend wird die vorliegende Erfindung anhand eines Ausführungsbeispiels erläutert, welches die erfindungsgemäße Lehre veranschaulichen, diese aber nicht beschränken soll.

### Ausführungsbeispiel:

### Schritt (1) des erfindungsgemäßen Schnelltest-Verfahrens:

### Probenvorbereitung:

Als Glas-Packmittel werden Fläschchen eingesetzt. Um Schwankungen bei den einzelnen Fläschchen auszuschließen, werden in diesem Ausführungsbeispiel jeweils 10 Fläschchen, hergestellt aus Borosilikatglasrohr, Typ Fiolax®, im Format 2 ml, gleichzeitig dem Test unterzogen. Zu Beginn werden die Fläschchen mit einem geeigneten Werkzeug, wie z.B. einem Gravurstift, auf der Außenseite beschriftet. Anschließend erfolgt eine Reinigung der Fläschchen mittels 60°C warmen Leitungswassers.

Hierzu werden die Fläschchen jeweils dreimal mit dem Leitungswasser befüllt und wieder entleert. Um Eintrockenrückstände zu vermeiden, erfolgt anschließend ein Spülvorgang mit VE-Wasser (vollentsalztem Wasser). Auch hierfür werden die Fläschchen jeweils 3 mal befüllt und wieder entleert. Das Ausblasen mit Stickstoff beendet die Reinigungsprozedur.

### Heißdampfbehandlung:

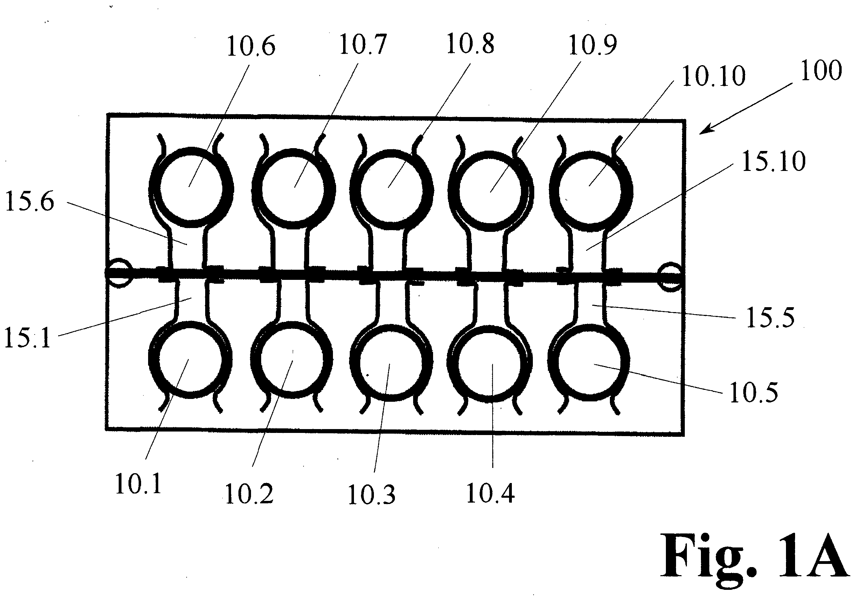

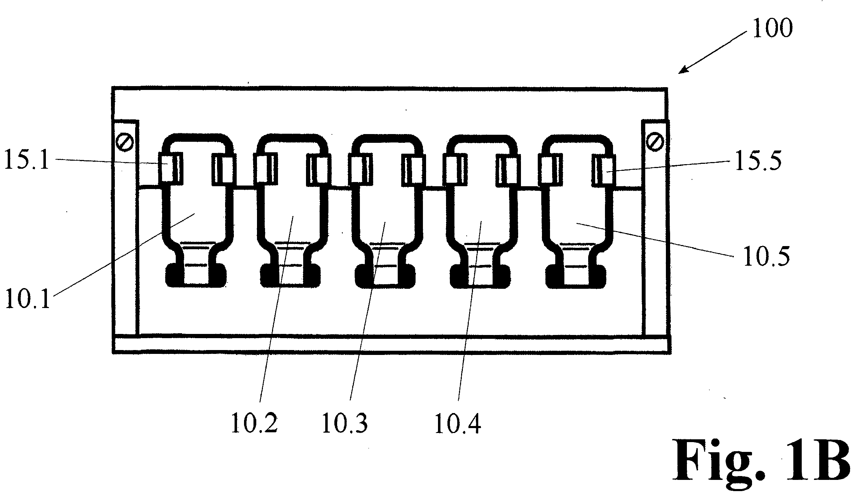

Die gereinigten Fläschchen werden dann einer Heißdampfbehandlung unterzogen. Hierzu werden diese in einen Probenhalter, bevorzugt über Kopf eingespannt und in einen Standardautoklaven gestellt. In den Figuren 1A und 1B sind in schematischer, vereinfachter Darstellung die Probenaufnahme 100 für die Autoklavierung abgebildet. Figur 1A zeigt eine Draufsicht auf eine Probenaufnahme 100 und Figur 1B eine Seitenansicht von Figur 1A. Die Fläschchen 10.1, 10.2, ...bis 10.10, die jeweils mit der Öffnung nach unten in den Probenhaltern 15.1, 15.2, ...bis 15.10 befestigt sind, stellen die zu untersuchenden Glas-Packmittel dar. Die eingespannten Fläschchen 10.1, 10.2,...bis 10.10 werden einer Autoklavierung unterzogen, d.h. diese werden heißem Wasserdampf ausgesetzt.

Die Autoklavierung wird für eine Dauer von 4 h bei einer Temperatur von 121 °C durchgeführt. Andere Zeitspannen und Temperaturen sind möglich und hängen von der Größe und Form des zu untersuchenden Packmittels und der verwendeten Glaszusammensetzung ab.

Aufgrund der Aufheiz- und Abkühlphase ergibt sich damit eine Gesamtzeit von ca. 7 h für Schritt (1). Nach dem Abkühlen werden die Fläschchen entnommen und erneut 3 mal mit VE-Wasser gespült. Nach dem Trockenblasen mit Stickstoff kann Schritt (1) in einem nachgeschalteten Verfahrensschritt, d.h. entweder Schritt (2a), (2b) oder (2c), ausgewertet werden. Für den alternativen Verfahrensschritt (2c) erfolgt keine Spülung mit VE-Wasser.

### Schritt (2a) des erfindungsgemäßen Schnelltest-Verfahrens:

### Visualisierung mit einem Lichtmikroskop (Stereomikroskop)

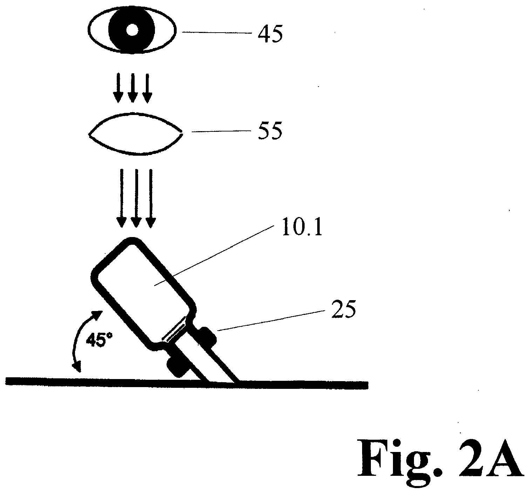

Zur Begutachtung wird jeweils 1 Fläschchen in einen geeigneten Probenhalter eingebaut. Dies wird in schematischer und vereinfachter Weise in Figur 2A veranschaulicht. Das Fläschchen 10.1 ist in einen Probenhalter 25 eingespannt, wobei der Neigungswinkel 45° zur Horizontalen beträgt. Dann kann das eingespannte Fläschchen 10.1 visuell, schematisch durch das Auge 45 in Figur 2A dargestellt, durch ein Lichtmikroskop, in diesem Ausführungsbeispiel ein Stereomikroskop, veranschaulicht durch die Linse 55, beurteilt werden. Im gezeigten Ausführungsbeispiel erfolgte die Charakterisierung der Interferenzfarben mittels eines Stereomikroskops bei 16facher Vergrößerung und streifender Beleuchtung. Typischerweise werden die Interferenzfarben insbesondere im Übergangsbereich vom Boden zur Wand des Fläschchens 10.1 beobachtet.

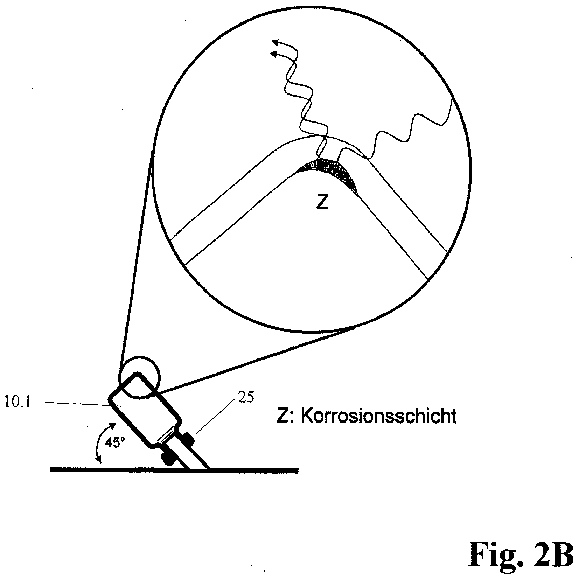

Eine starke Färbung wird als Neigung zur Delamination bewertet. Die Lage der Bereiche, in denen Interferenzen beobachtet werden, kann von Fläschchen zu Fläschchen variieren. In Figur 2B ist der kritische Bereich in Form des Übergangsbereichs zwischen Wand und Boden des Fläschchens 10.1 im Kreis vergrößert dargestellt. Die gebildete Korrosionszone Z bewirkt durch einen veränderten Brechungsindex gegenüber dem Grundglas, dass ein Teil des Lichts an der Grenzfläche zum Glas reflektiert wird und mit dem Licht interferiert, das an der Oberfläche der Schicht reflektiert wird. Tendenziell nimmt die Ausprägung Interferenzfarben mit der Dicke der Korrosionsschicht zu. Übersteigt die Dicke der Korrosionsschicht die Wellenlänge des Lichtes dagegen deutlich, würde der Effekt wieder abnehmen.

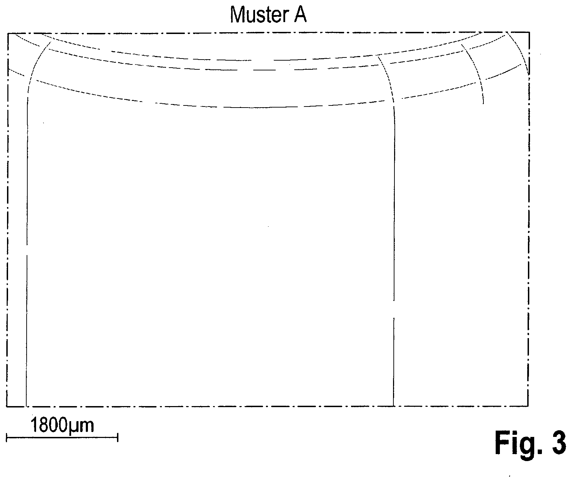

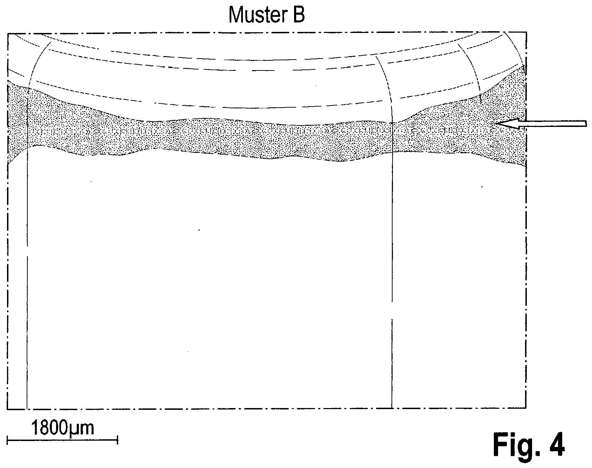

In den Figuren 3 und 4 sind zwei stereomikroskopische Aufnahmen von zwei verschiedenen Fläschchen (Fläschchen 1 und 2) nach dem Autoklavieren gemäß Verfahrensschritt (1) gezeigt. Figur 3 zeigt Fläschchen 1 (Muster A), bei dem im Übergangsbereich Wand/Boden nur gering ausgeprägte Interferenzfarben festzustellen sind. Die Neigung zur Delamination ist demnach für Fläschchen 1 als gering einzustufen. Im Gegensatz hierzu sind die Interferenzfarben bei Fläschchen 2 (Muster B) in Figur 4 im Übergangsbereich Wand/Boden deutlich sichtbar. Der Pfeil in Figur 4 bezeichnet die Position im Fläschchen 2, wo starke Interferenzfarben zu sehen sind. Dieses Fläschchen 2 ist daher deutlich anfälliger für Delamination als Fläschchen 1.

### Schritt (2b) des erfindungsgemäßen Schnelltest-Verfahrens:

### Visualisierung durch Anfärben

Fläschchen werden nach dem Autoklavieren mit einer Methylenblaulösung (Gewichtsverhältnis Methylenblau/ Wasser = 1/1000) befüllt und für 12 Stunden bei Raumtemperatur (RT) gelagert. Entsprechend dem Namen des Färbemittels werden Bereiche, welche beim Autoklavieren verändert wurden, oberflächennah blau angefärbt. Nach dem Ausspülen mit VE-Wasser (3x) werden die Fläschchen im Licht einer Kaltlichtlampe inspiziert. Bereiche, welche zur Delamination neigen, sind durch eine deutliche Blaufärbung zu erkennen. Fläschchen mit einer geringen Delaminationsneigung bleiben bei der Inspektion visuell unauffällig, d.h. zeigen keine ausgeprägte Blaufärbung.

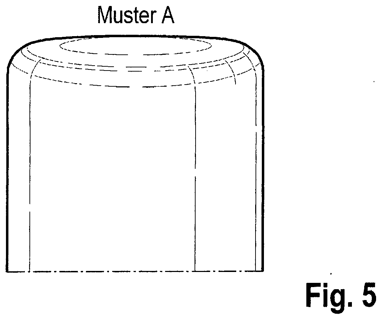

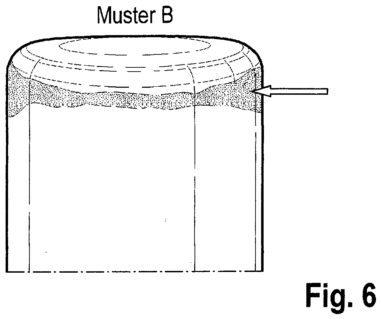

In den Figuren 5 und 6 sind Aufnahmen von zwei verschiedenen Fläschchen (Fläschchen 3 und 4) gezeigt, wie diese nach dem Autoklavieren und Anfärben mit Methylenblau aussehen.

Fläschchen 3 (Muster A) in Figur 5 zeigt im Übergangsbereich Wand/Boden keine Blaufärbung und ist damit ein Fläschchen, das nicht zur Delamination neigt. Fläschchen 4, das in Figur 6 abgebildet ist, zeigt nach dem Autoklavieren und Färben unter Verwendung einer Methylenblau-Lösung im Übergangsbereich Wand/Boden eine deutliche Blaufärbung, so dass Fläschchen 4 zur Delamination neigt. Der Pfeil in Figur 6 bezeichnet die Position im Fläschchen 4, wo eine starke Blaufärbung zu beobachten ist.

Mit der vorliegenden Erfindung wird somit erstmals ein Schnelltest-Verfahren zur Verfügung gestellt, das in einfacher Weise, zuverlässig und in relativ kurzer. Zeitspanne eine Aussage darüber bereitstellt, ob ein Glas-Packmittel eine Neigung zur Delamination zeigt oder nicht.

## Patentansprüche

1. Schnelltest-Verfahren zur Bewertung der Delaminationsneigung in Glas-Packmitteln, insbesondere für den Pharmabereich, das die nachfolgenden Schritte aufweist:
Schritt (1): Aussetzen der leeren Glas-Packmittel einer Atmosphäre aus Wasserdampf zur Ausbildung einer Korrosionszone;
und anschließend Durchführen von einem weiteren Schritt, ausgewählt aus Schritt (2a) oder Schritt (2b), umfassend
Schritt (2a): Visualisieren der Korrosionszone unter Verwendung eines Lichtmikroskops;
Schritt (2b): Visualisieren der Korrosionszone durch Anfärben und anschließende Inspektion.

2. Schnelltest-Verfahren nach Anspruch 1, **dadurch gekennzeichnet, dass** Schritt (1) in einem Autoklaven durchgeführt wird, wobei bevorzugt für mindestens 30 Minuten bis zu mehrere Stunden, besonders bevorzugt 1 bis 8 Stunden, noch bevorzugter 3 bis 6 Stunden das Glas-Packmittel Wasserdampf ausgesetzt wird.

3. Schnelltest-Verfahren nach einem der Ansprüche 1 oder 2, **dadurch gekennzeichnet, dass** Schritt (1) bei einer Temperatur im Bereich von über 100 bis 180 Grad C, bevorzugt 110 bis 150 Grad C durchgeführt wird.

4. Schnelltest-Verfahren nach Anspruch 1, **dadurch gekennzeichnet, dass** in Schritt (2a) als Lichtmikroskop ein Stereomikroskop, insbesondere ein Stereomikroskop mit streifender Beleuchtung verwendet wird.

5. Schnelltest-Verfahren nach Anspruch 1, **dadurch gekennzeichnet, dass** das Anfärben in Schritt (2b) unter Verwendung eines Färbemittels durchgeführt wird.

6. Schnelltest-Verfahren nach Anspruch 1 oder 5, **dadurch gekennzeichnet, dass** als Färbemittel Methylenblau, insbesondere eine Lösung von Methylenblau in Wasser oder Alkohol, eingesetzt wird.

7. Schnelltest-Verfahren nach Anspruch 1, 5 oder 6, **dadurch gekennzeichnet, dass** in Schritt (2b) eine Lösung von Methylenblau in das Glas-Packmittel gefüllt und bei Raumtemperatur stehen gelassen wird.

8. Schnelltest-Verfahren nach Anspruch 7, **dadurch gekennzeichnet, dass** die mit Methylenblau-Lösung gefüllten Glas-Packmittel in Schritt (2b) mehrere Minuten bis zu mehrere Stunden bei Raumtemperatur stehen gelassen werden.

9. Schnelltest-Verfahren nach mindestens einem der vorangehenden Ansprüche 1 und 5 bis 8, **dadurch gekennzeichnet, dass** in Schritt (2b) die Ausbildung einer Blaufärbung der Korrosionszone durch visuelle Inspektion am leeren Glas-Packmittel bewertet wird.

10. Schnelltest-Verfahren nach mindestens einem der vorangehenden Ansprüche 1 bis 9, **dadurch gekennzeichnet, dass** die Glas-Packmittel ausgewählt werden aus Flaschen, insbesondere Fläschchen oder Phiolen, Ampullen, Karpullen, Dosen oder Spritzen.

11. Schnelltest-Verfahren nach mindestens einem der vorangehenden Ansprüche 1 bis 10, **dadurch gekennzeichnet, dass** die Glas-Packmittel vor und/oder nach Durchführen von Schritt (1) gereinigt werden, bevorzugt durch
- mehrfaches Spülen der Glas-Packmittel durch Befüllen mit Wasser und Entleeren, bevorzugt unter Verwendung von Leitungswasser, vollentsalztem Wasser oder Reinstwasser, wobei zumindest für den letzten Spülvorgang vollentsalztes Wasser oder Reinstwasser eingesetzt wird, um Eintrockenrückstände zu vermeiden, und anschließend
- Trockenblasen der Glas-Packmittel mit inertem Gas, bevorzugt Stickstoff.

12. Schnelltest-Verfahren nach Anspruch 11, **dadurch gekennzeichnet, dass** das Wasser zum Spülen Raumtemperatur aufweist oder auf eine Temperatur oberhalb Raumtemperatur, bevorzugt oberhalb 50 Grad C, vorgewärmt wird.

## Claims

1. Rapid test method for evaluating the delamination tendency in glass packaging means, in particular for the pharmaceutical industry, which has the following steps:
step (1): exposing the empty glass packaging means to an atmosphere of steam to form a corrosion zone;
and subsequently carrying out a further step selected from step (2a) or step (2b), comprising
step (2a): visualizing the corrosion zone using a light microscope;
step (2b): visualizing the corrosion zone by staining and subsequent inspection.

2. Rapid test method according to Claim 1, **characterized in that** step (1) is carried out in an autoclave, wherein the glass packaging means is exposed to steam preferably for at least 30 minutes to several hours, particularly preferably 1 to 8 hours, still more preferably 3 to 6 hours.

3. Rapid test method according to either one of Claims 1 or 2, **characterized in that** step (1) is carried out at a temperature in the range from above 100 to 180 degrees C, preferably 110 to 150 degrees C.

4. Rapid test method according to Claim 1, **characterized in that**, in step (2a), as light microscope, a stereomicroscope, in particular a stereomicroscope having grazing illumination, is used.

5. Rapid test method according to Claim 1, **characterized in that** the staining in step (2b) is carried out using a stain.

6. Rapid test method according to Claim 1 or 5, **characterized in that** the stain used is methylene blue, in particular a solution of methylene blue in water or alcohol.

7. Rapid test method according to Claim 1, 5 or 6, **characterized in that**, in step (2b), a solution of methylene blue is charged into the glass packaging means and allowed to stand at room temperature.

8. Rapid test method according to Claim 7, **characterized in that** the glass packaging means charged with methylene blue solution in step (2b) are allowed to stand at room temperature for several minutes to several hours.

9. Rapid test method according to at least one of the preceding Claims 1 and 5 to 8, **characterized in that**, in step (2b), the forming of a blue stain of the corrosion zone is evaluated by visual inspection of the empty glass packaging means.

10. Rapid test method according to at least one of the preceding Claims 1 to 9, **characterized in that** the glass packaging means are selected from bottles, in particular vials or phials, ampoules, cartridges, capsules or syringes.

11. Rapid test method according to at least one of the preceding Claims 1 to 10, **characterized in that** the glass packaging means are cleaned before and/or after carrying out step (1), preferably by
- multiple rinsing of the glass packaging means by charging with water and emptying, preferably using mains water, demineralized water or ultrapure water, wherein, at least for the last rinsing operation, demineralized water or ultrapure water is used in order to avoid drying residues, and subsequently
- blowing dry the glass packaging means with inert gas, preferably nitrogen.

12. Rapid test method according to Claim 11, **characterized in that** the water for rinsing is at room temperature or is preheated to a temperature above room temperature, preferably above 50 degrees C.

## Revendications

1. Procédé de test rapide en vue d'évaluer la tendance à la déstratification dans des produits d'emballage en verre, en particulier dans le domaine pharmaceutique, le procédé comportant les étapes suivantes :
étape (1) : les emballages en verre vides sont exposés à une atmosphère de vapeur d'eau de manière à former une zone corrodée,
suivie par une autre étape, choisie parmi l'étape (2a) ou l'étape (2b), qui comprend
étape (2a) : visualisation de la zone de corrosion par recours à un microscope optique et
étape (2b) : visualisation de la zone de corrosion par coloration et ensuite inspection.

2. Procédé de test rapide selon la revendication 1, **caractérisé en ce que** l'étape (1) est exécutée dans un autoclave dans lequel le produit d'emballage en verre est exposé à la vapeur d'eau de préférence pendant au moins 30 minutes à plusieurs heures, de façon particulièrement préférable de 1 à 8 heures et de façon encore plus préférable de 3 à 6 heures.

3. Procédé de test rapide selon l'une des revendications 1 ou 2, **caractérisé en ce que** l'étape (1) est exécutée à une température comprise dans la plage de plus de 100 à 180 degrés C et de préférence de 110 à 150 degrés C.

4. Procédé de test rapide selon la revendication 1, **caractérisé en ce qu'**à l'étape (2a), il utilise comme un microscope optique un stéréomicroscope et en particulier un stéréo-microscope doté d'un éclairage en bande.

5. Procédé de test rapide selon la revendication 1, **caractérisé en ce que** la coloration de l'étape (2b) est réalisée en recourant à un colorant.

6. Procédé de test rapide selon les revendications 1 ou 5, **caractérisé en ce que** comme colorant il utilise le bleu de méthylène et en particulier une solution de bleu de méthylène dans l'eau ou l'alcool.

7. Procédé de test rapide selon les revendications 1, 5 ou 6, **caractérisé en ce qu'**à l'étape (2b), l'emballage en verre est rempli d'une solution de bleu de méthylène et est laissé ensuite reposé à température ambiante.

8. Procédé de test rapide selon la revendication 7, **caractérisé en ce que** l'emballage en verre rempli d'une solution de bleu de méthylène à l'étape (2b) est maintenu à température ambiante pendant plusieurs minutes à plusieurs heures.

9. Procédé de test rapide selon la revendication selon au moins l'une des revendications 1 et 5 à 8 qui précèdent, **caractérisé en ce qu'**à l'étape (2b), la formation d'une coloration bleue de la zone de corrosion est évaluée par inspection visuelle du produit d'emballage en verre vide.

10. Procédé de test rapide selon au moins l'une des revendications 1 à 9 qui précèdent, **caractérisé en ce que** les produits d'emballage en verre sont sélectionnés parmi des bouteilles, en particulier de petits flacons ou des fioles, des ampoules, des capsules, des boîtes ou des aiguilles.

11. Procédé de test rapide selon au moins l'une des revendications 1 à 10 qui précèdent, **caractérisé en ce que** les produits d'emballage en verre sont nettoyés avant et/ou après l'exécution de l'étape (1), de préférence par
rinçages multiples des produits d'emballage en verre par remplissage à l'eau et vidange, de préférence en utilisant de l'eau de distribution, de l'eau complètement déminéralisée ou de l'eau très pure, l'eau complètement déminéralisée ou l'eau très pure étant utilisées au moins pour la dernière opération de rinçage pour éviter la présence de résidus de séchage,
et ensuite
par séchage à l'aide d'un gaz inerte, de préférence l'azote, soufflé sur les produits d'emballage en verre.

12. Procédé de test rapide selon la revendication 11, **caractérisé en ce que** l'eau de rinçage est à température ambiante ou est préchauffée à une température supérieure à la température ambiante et de préférence au-dessus de 50 degrés C.
